# EUROPÄISCHE PATENTANMELDUNG

(11) **EP 3 211 196 A1**
(43) Veröffentlichungstag der Anmeldung: **30.08.2017**
(21) Anmeldenummer: 17153659.2
(22) Anmeldetag: 30.01.2017
(51) Int. Cl.: F02B 37/04, F02B 37/14, F02B 37/16, F02B 33/40, F02D 23/00, F02B 37/12

(54) **VERBRENNUNGSKRAFTMASCHINE FÜR EIN KRAFTFAHRZEUG UND VERFAHREN ZUM BETREIBEN EINER VERBRENNUNGSKRAFTMASCHINE FÜR EIN KRAFTFAHRZEUG**

(30) Priorität: 29.02.2016 DE 102016203193
(71) Anmelder: VOLKSWAGEN AKTIENGESELLSCHAFT, 38440 Wolfsburg (DE)
(72) Erfinder: Nebelin, Lars, 31171 Nordstemmen (DE); Kraus, Stephan, 38464 Gross Twülpstedt (DE); Westendorf, Johannes, 38104 Braunschweig (DE)

(57) **Zusammenfassung**

Die Erfindung betrifft ein Verbrennungskraftmaschine für ein Kraftfahrzeug mit:
einem Verbrennungsmotor (2);
einer Luftzufuhr (9) für den Verbrennungsmotor (2),
einem Abgasturbolader (5) mit Verdichter (5a),
einem Zusatzverdichter (6), der unabhängig vom Abgasturbolader (5) betreibbar ist, wobei
der Zusatzverdichter (6) stromabwärts zwischen dem Verdichter (5a) des Abgasturboladers (5) und der Luftzufuhr (9) des Verbrennungsmotors (2) angeordnet ist und wobei der Zusatzverdichter (6) in Abhängigkeit von einem Betriebszustand des Abgasturboladers (5) derart betreibbar ist, dass er einem durch den Betriebszustand des Abgasturboladers (5) hervorgerufenen Druckabfall in der Luftzufuhr (9) entgegenwirkt.

## Beschreibung

Die Erfindung betrifft eine Verbrennungskraftmaschine für ein Kraftfahrzeug und ein Verfahren zum Betreiben einer Verbrennungskraftmaschine für ein Kraftfahrzeug.

Es ist bekannt, Luft für die Luftzufuhr einer Verbrennungskraftmaschine aufzuladen. Dies geschieht typischerweise über einen Abgasturbolader, der eine Abgasturbine und einen Verdichter hat. Abgas der Verbrennungskraftmaschine treibt die Abgasturbine an, die wiederum den Verdichter antreibt, der Luft, die der Verbrennungskraftmaschine zugeführt werden soll, verdichtet.

Außerdem ist es bekannt, dass Abgasturbolader eine verstellbar Turbinengeometrie haben können, mit der die Leistung des Abgasturboladers eingestellt werden kann.

Abgasturbolader werden bei gängigen Motorentypen, wie Ottomotoren und Dieselmotoren eingesetzt.

Bei aufgeladenen Dieselmotoren mit Abgasturbolader mit variabler Turbinengeometrie kann während einer Volllastbeschleunigung nach dem Verdichter ein hoher Druck bzw. ein hohes Luftvolumen am Dieselmotor anliegen. Bei einem Gangwechsel oder einer plötzlichen Lastabnahme kann am Dieselmotor ein strömungstechnisches Phänomen entstehen, welches auch als Kaudern bezeichnet wird. Beim Gangwechsel oder bei einer plötzlichen Lastabnahme verändert der Dieselmotor bspw. kurzzeitig sein sogenanntes Schluckverhalten, das heißt der Luftmassendurchsatz durch den Dieselmotor hindurch verringert sich kurzzeitig. Dem Abgasturbolader steht dementsprechend in diesem Moment, das heißt in diesem Betriebszustand des Dieselmotors, weniger Abgasenthalpie zum Antreiben seines Verdichters zur Verfügung, wodurch sich auch entsprechend der vom Verdichter erzeugte Luftdruck (auch Ladedruck genannt) verringert. Dementsprechend kann der Druck, der sich zwischen dem Abgasturbolader-Verdichter und dem Zylinderkopf des Dieselmotors aufgebaut hat, größer werden als der vom Verdichter erzeugte Druck, sodass sich die Druckdifferenz über den Verdichter, bspw. durch Überströmen von Luft über das Verdichterrad des Verdichters abbaut.

Dadurch kann ein Strömungsabriss am Verdichterrad und ein kurzzeitiges Pumpen entstehen, welches akustisch wahrnehmbar ist und als "Kaudern" bezeichnet wird.

Allgemein sind verschiedene Maßnahmen bekannt, um den Kaudern entgegenzuwirken.

Bei Verbrennungskraftmaschinen, die mit einer (Hochdruck)-Abgasrückführung ausgerüstet sind, kann ein Hochdruckventil der Abgasrückführung geöffnet werden, um den Druck über einen zugehörigen Abgasrückführungskanal abzubauen. Parallel dazu kann bspw. die variable Turbinengeometrie des Abgasturboladers verändert werden, um die Antriebsleistung des Verdichters zu reduzieren und ihn nicht nahe seiner Pumpgrenze zu betreiben.

Ferner ist es bekannt, anstelle des Hochdruckventils eine Luftregelklappe, die sich zwischen einem Lufteintritt der Verbrennungskraftmaschine und dem Verdichter des Abgasturboladers befindet, nahezu vollständig zu schließen. Damit wirkt die Luftregelklappe als Drossel, die dem Überströmen der Luft über den Verdichter in Richtung des Abgasturbolader-Verdichters entgegenwirkt und damit einen Strömungsabriss am Verdichterrad verhindert oder diesem entgegenwirkt.

Nachteilig an diesen beiden Maßnahmen ist, dass durch das Abbauen des Ladedrucks im kompletten Bereich zwischen Verdichter und Verbrennungskraftmaschine, der Ladedruck wieder aufgebaut werden muss, wenn bspw. ein Gang wieder eingekuppelt ist oder vom Fahrer eine entsprechende Last angefordert wird. Hierbei bleibt bei der Luftklappenlösung im Gegensatz zur Lösung bei der das Hochdruckventil der Abgasrückführung geöffnet wird, ein gewisser Ladedruck bestehen, der allerdings immer noch niedriger als der gewünschte Ladedruck ist. Ferner kann ein kurzzeitiger Luftmangel im Brennraum der Verbrennungskraftmaschine entstehen, der einerseits zu einem verschlechterten Anbindungsverhalten bspw. bei einem Gangwechsel führen kann (sogenanntes "Turboloch") und andererseits auch zu einem erhöhten Schadstoffausstoß, der aufgrund der geringeren Zylinderfüllung entstehen kann. Dabei kann durch den lokalen Luftmangel Ruß gebildet werden und außerdem könnten auch Stickoxide durch das Wegschalten der Abgasrückführung gebildet werden, wenn das Anbindungsverhalten durch diese Maßnahme verbessert werden soll.

Bei Ottomotoren ist es außerdem bekannt, einen Rezirkulationskanal vorzusehen, der über ein schaltbares Ventil den Ladeluftkanal nach dem Abgasturbolader-Verdichter in Richtung vor den Verdichter öffnet. Der Verdichter kann also bei offenem Ventil im Kreis fördern und wird daher nicht an seiner Pumpgrenze betrieben. Nachteilig daran ist, dass diese Lösung nicht ohne weiteres auf Dieselmotoren übertragbar ist, da rezirkulierte Ladeluft, je nach absolutem Druckniveau, aus dem Ansaugtrakt vor dem Verdichter entweichen könnte. Da beim Dieselmotor oftmals eine Abgasrückführung zum Einsatz kommt, bei der Abgas vor dem Verdichter zugeführt wird, könnte bei Anwendung des Rezirkulationskanals Abgas nach außen gedrückt werden, was unerwünscht ist. Ferner könnte durch das Entgegenwirken gegen den durch die Abgasrückführung zugeführten Abgasstrom eine notwendige rückgeführte Abgasmasse unterschritten werden. Außerdem wären weitere bauliche Veränderungen erforderlich, wie bspw. ein Bypasskanal, Schubumluftventil, etc., was den Einsatz dieser Technik bei Dieselmotoren erschwert.

Aus der deutschen Offenlegungsschrift DE 10 2013 008 826 A1 ist ein Verfahren zum Betreiben einer Brennkraftmaschine bekannt, die einen Verbrennungsmotor, einen Frischgasstrang und einen Abgasstrang hat. Außerdem ist ein Abgasturbolader mit einem in den Frischgasstrang integrierten Verdichter vorgesehen und ein elektrisch angetriebener Zusatzverdichter. Bei einem Lastsprung wird zunächst der Zusatzverdichter aktiviert und anschließend wird ein Scavenging durchgeführt. Dadurch entsteht eine temporäre Druckerhöhung im Frischgasstrang. Dem Problem des Kauderns wird in diesem Dokument allerdings nur bedingt Rechnung getragen, da nur der Lastsprung berücksichtigt wird und das Kaudern, wie erwähnt, aber auch bei anderen Situation auftreten kann.

Aufgabe der vorliegenden Erfindung ist es, eine Verbrennungskraftmaschine und ein Verfahren zum Betreiben einer Verbrennungskraftmaschine bereitzustellen, welche die oben genannten Nachteile wenigstens teilweise überwinden.

Diese Aufgabe wird durch die erfindungsgemäße Verbrennungskraftmaschine nach Anspruch1 und das erfindungsgemäße Verfahren zum Betreiben einer Verbrennungskraftmaschine nach Anspruch 6 gelöst.

Nach einem ersten Aspekt stellt die vorliegende Erfindung eine Verbrennungskraftmaschine für ein Kraftfahrzeug bereit, umfassend:
einen Verbrennungsmotor,
eine Luftzufuhr für den Verbrennungsmotor,
einen Abgasturbolader mit Verdichter,
einen Zusatzverdichter, der unabhängig vom Abgasturbolader betreibbar ist, wobei
der Zusatzverdichter stromabwärts zwischen dem Verdichter des Abgasturboladers und der Luftzufuhr des Verbrennungsmotors angeordnet ist und wobei der Zusatzverdichter in Abhängigkeit von einem Betriebszustand des Abgasturboladers derart betreibbar ist, dass er einem durch den Betriebszustand des Abgasturboladers hervorgerufenen Druckabfall in der Luftzufuhr entgegenwirkt.

Nach einem zweiten Aspekt stellt die vorliegende Erfindung ein Verfahren zum Betreiben einer Verbrennungskraftmaschine für ein Kraftfahrzeug, insbesondere nach dem ersten Aspekt, bereit, wobei diese mit einem Verbrennungsmotor, einer Luftzufuhr für den Verbrennungsmotor, einem Abgasturbolader mit Verdichter und mit einem Zusatzverdichter versehen ist, wobei der Zusatzverdichter unabhängig vom Abgasturbolader betreibbar ist und stromabwärts zwischen dem Verdichter des Abgasturboladers und der Luftzufuhr des Verbrennungsmotors angeordnet ist, wobei das Verfahren umfasst:
Ermitteln eines Betriebszustands des Abgasturboladers;
Betreiben, in Abhängigkeit des ermittelten Betriebszustands des Abgasturboladers, des Zusatzverdichters derart, dass er einem aufgrund des Betriebszustands des Abgasturboladers hervorgerufenen Druckabfall in der Luftzufuhr entgegenwirkt.

Weitere vorteilhafte Aspekte der Erfindung ergeben sich aus den Unteransprüchen und der folgenden Beschreibung bevorzugter Ausführungsbeispiele der vorliegenden Erfindung.

Eine erfindungsgemäße Verbrennungskraftmaschine für ein Kraftfahrzeug umfasst wie eingangs erwähnt, einen Verbrennungsmotor und eine Luftzufuhr für den Verbrennungsmotor, die bspw. als Lufteintritt des Verbrennungsmotors ausgestaltet sein kann. Der Verbrennungsmotor kann ein Ottomotor, ein Dieselmotor oder dergleichen sein und eine beliebige Anzahl von Zylinder aufweisen.

Ferner umfasst die Verbrennungskraftmaschine einen Abgasturbolader mit Verdichter, wobei der Abgasturbolader mit Abgas des Verbrennungsmotors betrieben wird und der Verdichter Luft, die für die Verbrennung im Verbrennungsmotor vorgesehen ist, auflädt, wie es allgemein bekannt ist. Der Abgasturbolader kann bspw. mit variabler Turbinengeometrie ausgestattet sein, wie es grundsätzlich im Stand der Technik bekannt ist.

Außerdem umfasst die Verbrennungskraftmaschine einen Zusatzverdichter, der unabhängig vom Abgasturbolader betreibbar ist, wodurch der Zusatzverdichter auch unabhängig von einer Abgasenthalpie betreibbar ist. Der Zusatzverdichter kann elektrisch, mechanisch oder auf eine andere von der Abgasenthalpie unabhängigen Art und Weise betrieben werden. Außerdem kann der Zusatzverdichter eine beliebe Bauart aufweisen und bspw. ein Verdichterrad aufweisen, als Schraubenverdichter ausgestaltet sein, auf dem Verdrängerprinzip oder auf einem anderen bekannten Prinzip beruhen, etc.

Der Zusatzverdichter ist stromabwärts zwischen dem Verdichter des Abgasturboladers und der Luftzufuhr des Verbrennungsmotors bspw. in einem Luftzufuhrkanal angeordnet. Der Zusatzverdichter ist in Abhängigkeit von einem Betriebszustand des Abgasturboladers derart betreibbar, dass er einem durch den Betriebszustand des Abgasturboladers hervorgerufenen Druckabfall in der Luftzufuhr entgegenwirkt.

Dadurch kann bei manchen Ausführungsbeispielen ein Kaudern verhindert oder zumindest verringert werden, da der fehlende Ladedruck, der nicht mehr aufgrund des eingangs erwähnten geänderten Schluckverhaltenes des Verbrennungsmotors und der damit einhergehenden Verringerung der Abgasenthalpie von dem Abgasturbolader-Verdichter erzeugt werden kann, durch den Zusatzverdichter kompensiert wird.

Bei manchen Ausführungsbeispielen ist der Zusatzverdichter derart ausgestaltet, dass seine Pumpgrenze bei einem niedrigeren Luftmassenstrom liegt als die Pumpgrenze des Abgasturboladers mit Verdichter. Dadurch kann der Zusatzverdichter in einem Bereich betrieben werden, in dem der Abgasturbolader mit dem Verdichter keinen ausreichenden Ladedruck mehr erzeugt und folglich ein Kaudern auftreten könnte. Die Pumpgrenze eines Abgasturboladers bzw. eines Verdichters ist dem Fachmann bekannt und kann bspw. als die Grenze eines Verdichterkennfeldes des Verdichters gesehen werden. Unterhalb der Pumpgrenze kann bspw. der Verdichter nicht mehr ausreichend Druck erzeugen, sodass das eingangs erwähnte Überströmen von Luft über ein Verdichterrad oder dergleichen geschehen kann. Dieses Überströmen bezeichnet man auch als Pumpen. Das Verdichterkennfeld kann bspw. auf einer Ordinate ein Druckverhältnis zwischen einem Luftdruck vor und nach dem Verdichter aufweisen und auf der Abszisse einen Luftmassenstrom.

Bei manchen Ausführungsbeispielen ist eine Umgehung des Zusatzverdichters vorgesehen und der Zusatzverdichter wird mittels der Umgehung umgangen, solange der Abgasturbolader oberhalb seiner Pumpgrenze betrieben wird. Dadurch es ist möglich, den Zusatzverdichter nur dann zu aktivieren und zuzuschalten, wenn er auch benötigt wird, das heißt, wenn die Gefahr besteht, dass ein Kaudern auftritt.

Bei manchen Ausführungsbeispielen ist in der Umgehung ein Absperrmittel vorgesehen, das bspw. als Luftregelklappe ausgestaltet sein kann, als Rückschlagventil oder als anders ausgestaltetes Umgehungsventil oder dergleichen. Bei manchen Ausführungsbeispielen sind an der Luftregelklappe drei Anschlüsse vorgesehen, nämlich einer, an dem der Zusatzverdichter angeschlossen ist, einer, an dem die Umgehung angeschlossen ist und einer, an dem die Luftzufuhr von dem Verbrennungsmotor angeschlossen ist. Dadurch kann die Luftregelklappe im normalen Betrieb als Luftregelklappe betrieben werden und im Umgehungsbetrieb so eingestellt werden, dass sie die Umgehung dicht macht, aber trotzdem die vom Zusatzverdichter gelieferte Luft passieren lässt und dem Verbrennungsmotor über die Luftzufuhr zuführt.

Manche Ausführungsbeispiele betreffen ein Verfahren zum Betreiben einer Verbrennungskraftmaschine für ein Kraftfahrzeug, wie sie hierin und insbesondere oben beschrieben wurde, wobei diese, wie erwähnt, mit einem Verbrennungsmotor, einer Luftzufuhr für den Verbrennungsmotor, einem Abgasturbolader mit Verdichter und mit einem Zusatzverdichter versehen ist, wobei der Zusatzverdichter unabhängig vom Abgasturbolader betreibbar ist und stromabwärts zwischen dem Verdichter des Abgasturboladers und der Luftzufuhr des Verbrennungsmotors angeordnet ist. Das Verfahren kann dabei insbesondere von einer Steuerung, wie einem Motorsteuergerät, ausgeführt werden, die wenigstens einen Mikroprozessor und einen Speicher umfasst und über ein Kraftfahrzeug-Bussystem mit weiteren Komponenten eines Kraftfahrzeus gekoppelt sein kann.

Das Verfahren umfasst das Ermitteln eines Betriebszustands des Abgasturboladers mit Verdichter und das Betreiben, in Abhängigkeit des ermittelten Betriebszustands des Abgasturboladers mit Verdichter, des Zusatzverdichters derart, dass er einem aufgrund des Betriebszustands des Abgasturboladers mit Verdichter hervorgerufenen Druckabfalls in der Luftzufuhr entgegenwirkt, wie es auch schon oben beschrieben wurde.

Die Ermittlung des Betriebszustandes des Abgasturboladers dient dazu, einen Betriebszustand zu erkennen, bei dem ein Kaudern auftreten kann bzw. einen Betriebszustand zu erkennen, bei dem der Abgasturbolader mit Verdichter unterhalb seiner Pumpgrenze betrieben wird. Diese Ermittlung des Betriebszustandes kann dabei einerseits umfassen, dass ein momentaner Betriebszustand des Abgasturboladers mit Verdichter erkannt wird, bei dem ein Kaudern auftritt bzw. bei dem er unterhalb seiner Pumpgrenze betrieben wird. Die Ermittlung des Betriebszustandes kann aber auch umfassen, dass Parameter ermittelt werden, die indikativ für eine erwartete Betriebszustandsänderung des Abgasturboladers sind, bei der dann ein Kaudern auftreten könnte bzw. ein Betrieb unterhalb seiner Pumpgrenze auftreten könnte. Im letzteren Fall handelt es sich folglich um eine Prädiktion, bei der versucht wird, vorherzusagen, ob ein Betriebszustand bzw. Betriebspunkt des Abgasturboladers auftreten könnte, der zum Kaudern führen könnte bzw. bei dem der Abgasturbolader unterhalb seiner Pumpgrenze betrieben werden könnte.

Bei manchen Ausführungsbeispielen umfasst das Ermitteln des Betriebszustands das Ermitteln eines Luftmassenstroms zwischen dem Zusatzverdichter und dem Abgasturbolader mit Verdichter und/oder das Ermitteln eines Luftzufuhrdrucks zwischen dem Abgasturbolader mit Verdichter und dem Zusatzverdichter und/oder das Ermitteln eines Luftzufuhrdrucks stromabwärts des Zusatzverdichters. Dadurch ist es möglich, zu ermitteln, wo sich der Abgasturbolader bzw. sein Verdichter gerade aktuell im Verdichterkennfeld befindet und ob die Gefahr besteht, dass ein Kaudern bzw. ein Betrieb unterhalb der Pumpgrenze auftritt.

Bei manchen Ausführungsbeispielen ist der ermittelte Parameter repräsentativ für eine der folgenden Zustandsgrößen: Drehzahl des Verbrennungsmotors, Drehmoment des Verbrennungsmotors, Getriebestatus, Kupplungsstatus. Diese Zustandsgrößen können in der Prädiktion verwendet werden, da sie einen möglichen Betriebszustand anzeigen, bei dem mit einer bestimmten Wahrscheinlichkeit vorhergesagt werden kann, dass eine Gefahr des Kauderns bzw. Betreibens unterhalb der Pumpgrenze des Abgasturboladers mit Verdichter besteht.

So kann bspw. aus einer sehr hohen Drehzahl der Verbrennungskraftmaschine geschlossen werden, dass ein Gangwechsel bevorsteht und daher demnächst ein Kaudern eintreten könnte. Entsprechend kann der Zusatzverdichter bereits bei Erkennen eines solchen Ereignisses auf einer vorgegebenen Drehzahl betrieben werden, z.B. der Höchstdrehzahl, um bereits entsprechenden Ladedruck zu erzeugen, der dann nach entsprechendem Abschalten der Umgehung dem Verbrennungsmotor zugeführt werden kann und somit dem Druckabfall der von dem Verdichter des Abgasturboladers kommend Luft entgegenwirken kann bzw. den Druckabfall kompensieren kann.

Gleiches gilt für die Bestimmung des Getriebestatus. Zum Beispiel deutet ein niedriger eingelegter Gang, wie der erste Gang, auf einen bevorstehenden Gangwechsel hin. Gleiches gilt für einen erkannten Leerlauf oder dergleichen, bei der sich das Getriebe in der Leerlaufstellung befindet. Auch hier ist es wahrscheinlich, dass bald ein Gang eingelegt wird. Ähnliches gilt für das Erkennen, dass eine Kupplung betätigt wurde. Auch hier ist es wahrscheinlich, dass ein (nächst höherer oder niedrigerer) Gang eingelegt wird.

Auch das Drehmoment des Verbrennungsmotors kann indikativ für einen bevorstehenden Lastwechsel sein. Das Drehmoment kann bspw. aus der Einspritzmenge abgeleitet werden. Eine niedrige Einspritzmenge bzw. ein niedriges Drehmoment deutet auf eine geringe Abgasenthalpie hin und damit auf einen Betriebszustand, bei dem ein Kaudern bzw. ein Betreiben unterhalb der Pumpgrenze auftreten kann.

Manche Ausführungsbeispielen betreffen auch ein Kraftfahrzeug mit einer Verbrennungskraftmaschine, wie sie hierin beschrieben ist, und einer Steuerung, die dazu ausgelegt und eingerichtet ist, das hierin beschriebene Verfahren auszuführen.

Insgesamt kann mit dem Zusatzverdichter der Ladedruck vor dem Lufteintritt des Verbrennungsmotors auch dann auf einem hohen Niveau gehalten werden, wenn der Abgasturbolader mit Verdichter keinen entsprechenden Ladedruck liefert. Dementsprechend ist auch ein gutes Anbindeverhalten des Verbrennungsmotors, bspw. bei einem Gangwechsel oder starken Lastwechseln, realisierbar und Emissionsspitzen aufgrund von Luftmangel beim Anbinden können vermieden oder zumindest vermindert werden.

Ausführungsbeispiele der Erfindung werden nun beispielhaft und unter Bezugnahme auf die beigefügte Zeichnung beschrieben, in der:
Fig. 1 schematisch ein Ausführungsbeispiel einer Verbrennungskraftmaschine zeigt;
Fig. 2 Verdichterkennfelder des Abgasturbolader-Verdichters und des Zusatzverdichters veranschaulicht; und
Fig. 3 ein Ablaufschema eines Ausführungsbeispiels eines Verfahren zum Betreiben der Verbrennungskraftmaschine von Fig. 1 darstellt.

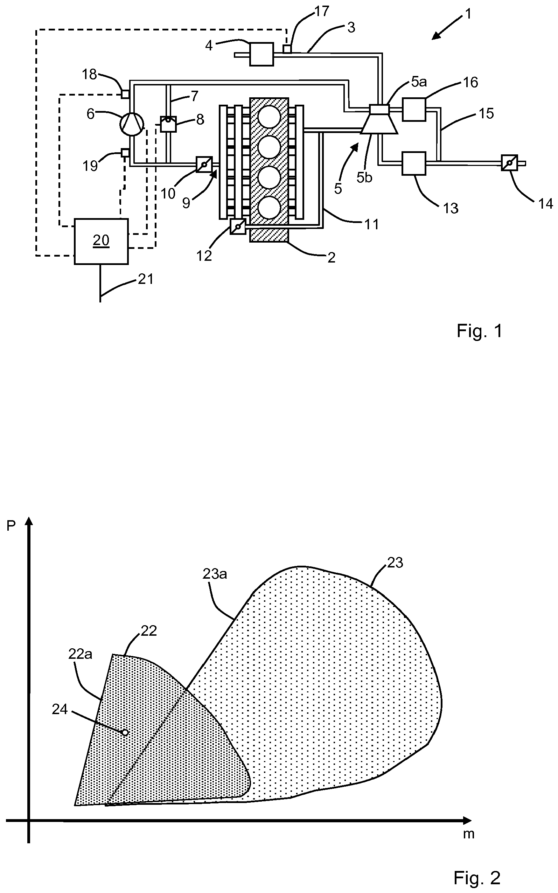

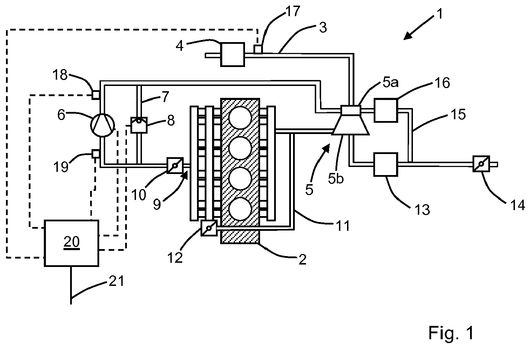

Ein Ausführungsbeispiel einer Verbrennungskraftmaschine 1 mit einem Verbrennungsmotor 2, der hier als Vierzylinder-Dieselmotor ausgestaltet ist, ist in Fig. 1 veranschaulicht.

Es ist ein Abgasturbolader 5 mit einem Verdichter 5a und einer Turbine 5b mit variabler Geometrie vorgesehen. Die Turbine 5b des Abgasturboladers 5 wird mit Abgas aus dem Verbrennungsmotor 2 betrieben.

Dem Verdichter 5a wird Frischluft über eine Frischluftzufuhr 3 mit einem Luftfilter 4 zugeführt und von ihm entsprechend verdichtet.

Außerdem ist ein elektrischer Zusatzverdichter 6 vorgesehen, der parallel zu einer Umgehung ("Bypass") 7 angeordnet ist. In der Umgehung 7 ist eine Bypassventil 8 angeordnet, das entsprechend geschaltet werden kann und so den Durchgang durch die Umgehung sperrt oder öffnet. Ist das Bypassventil gesperrt, so wird die von dem Verdichter 5a des Abgasturboladers 5 kommende Luft durch den Zusatzverdichter 6 geleitet.

Luft, die vom Verdichter 5a verdichtet wurde gelangt folglich je nach Stellung des Bypassventils 8 entweder durch die Umgehung 7 durch einen Lufteintritt 9 in den Verbrennungsmotor 2 oder die vom Verdichter 5a verdichtete Luft gelangt in den Zusatzverdichter 6, der dann die Luft weiter verdichten kann. Vom Zusatzverdichter 6 gelangt dann ebenfalls die verdichtete Luft durch den Lufteintritt 9 in den Verbrennungsmotor 2.

Vor dem Lufteintritt 9 ist eine Luftregelklappe 10 angeordnet, die die Luftzufuhr durch den Lufteintritt 9 entsprechend regeln kann, wie es fachüblich ist.

Außerdem ist eine Hochdruck-Abgasrückführung 11 vorgesehen, die Abgas von dem Abgasturbolader 5 über eine entsprechendes Hochdruck-Abgasrückführungsventil 12 in den Verbrennungsmotor auf der Luftzufuhrseite zuführen kann, wie es ebenfalls dem Fachmann bekannt ist, sodass Luft, die durch den Lufteintritt 9 gelangt, mit Abgas aus der Hochdruck-Abgasrückführung 11 vermischt werden kann.

Zusätzlich ist im Abgasstrang stromabwärts des Abgasturboladers 5 eine Abgasreinigung 13 vorgesehen, die bspw. einen entsprechenden Katalysator aufweist. Abgas, das von der Abgasreinigung 13 gereinigt wurde, geht dann durch eine Abgasklappe 14, wie es im Stand der Technik bekannt ist.

Neben der Hochdruck-Abgasrückführung 11 ist eine Niederdruck-Abgasrückführung 15 vorgesehen, die Abgas, von der Abgasreinigung 13 kommend, über ein Niederdruck-Abgasrückführungsventil 16 dem Verdichter 5a des Abgasturboladers 5 zuführt, wie es ebenfalls im Stand der Technik bekannt ist.

Außerdem ist hier ein Luftmassenstromsensor 17 vorgesehen, der stromabwärts des Luftfilters 4 und vor dem Verdichter 5a des Abgasturboladers 5 angeordnet ist, sodass im Bereich des Luftmassenstromsensors 17 der Umgebungsdruck herrscht. Die Position des Luftmassenstromsensors ist hier nur rein beispielhalft und grundsätzlich kann der Luftmassenstromsensor beliebig angeordnet sein, z.B. irgendwo auf dem Weg zwischen dem Verdichter 5a und dem Lufteintritt 9. Weiter ist ein erster Drucksensor 18 vorgesehen, der ebenfalls zwischen dem Abgasturbolader 5 bzw. seinem Verdichter 5a und der Umgehung 7 bzw. dem Zusatzverdichter 6 angeordnet ist, und ein zweiter Drucksensor 19, der nach dem Zusatzverdichter 6 angeordnet ist.

Der Luftmassenstromsensor 17 misst den Luftmassenstrom, der vom Verdichter 5a ausgegeben wird und an die Umgehung 7 bzw. den Zusatzverdichter 6 geliefert wird.

Der erste Drucksensor 18 misst einen Ladedruck bzw. Luftdruck, der am Eingang des Zusatzverdichters 6 anliegt und folglich auch vom Verdichter 5a erzeugt wird und an seinem Ausgang anliegt.

Der zweite Drucksensor 19 misst einen Ladedruck bzw. Luftdruck, wie er nach dem Zusatzverdichter 6 vorliegt.

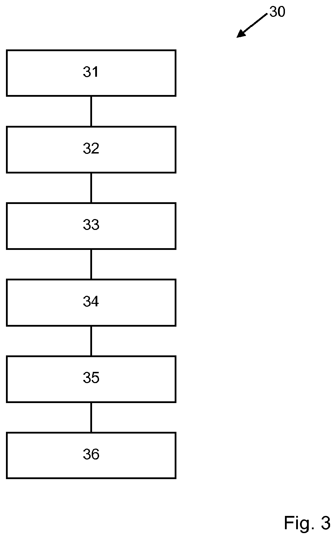

Schlussendlich ist eine Steuerung 20 vorgesehen, die bspw. einen Prozessor und einen Speicher aufweist und dazu eingerichtet ist, ein Verfahren 30 zum Betreiben der Verbrennungskraftmaschine 1 auszuführen, wie es weiter unten im Zusammenhang mit Fig. 3 erläutert wird.

Die Steuerung 20 ist hier beispielhaft mit den Sensoren 17 bis 19 gekoppelt, mit dem Zusatzverdichter 6 und dem Bypassventil 8. Natürlich kann die Steuerung 20 auch mit den weiteren Komponenten, wie sie oben beschrieben wurden, gekoppelt sein (z.B. Verbrennungsmotor 2, Abgasturbolader 5, Klappen 12 und 14, Abgasreinigung 13, etc.). Diese Verbindungen sind hier nur der Übersicht halber weggelassen und der Einfachheit halber mit dem Bezugszeichen 21 benannt und können, wie die anderen Verbindungen auch, direkt und/oder bspw. über ein Bussystem des Kraftfahrzeugs realisiert sein, in dem die Verbrennungskraftmaschine 1 angeordnet ist.

Vor einer Beschreibung des Verfahrens 30 wird zunächst anhand der Fig. 2 das Verdichterkennfeld 22 des Zusatzverdichters 6 und das Verdichterkennfeld 23 des Verdichters 5a des Abgasturboladers 5 erläutert.

Die Fig. 2 zeigt auf der Ordinate ein Druckverhältnis "P" zwischen einem Eingangsdruck vorm Verdichter (Zusatzverdichter 6 bzw. Verdichter 5a) und einem Ausgangsdruck nach dem Verdichter (Zusatzverdichter 6 bzw. Verdichter 5a) und auf der Abszisse einen Luftmassenstrom "m", der durch den Verdichter (Zusatzverdichter 6 bzw. Verdichter 5a) fließt.

Wie der Fig.2 entnehmbar ist, hat der Verdichter 5a eine untere Pumpgrenze 23a seines Verdichterkennfeldes 23 und der Zusatzverdichter 6 hat eine untere Pumpgrenze 22a seines Verdichterkennfeldes 22, wobei die untere Pumpgrenze 22a des Zusatzverdichters 22 bei deutlich niedrigeren Luftmassenstromwerten liegt als die untere Pumpgrenze des Verdichters 5a des Abgasturboladers. 5

Mit dem Bezugszeichen 24 ist ein kritischer Betriebspunkt gekennzeichnet, der unterhalb der Pumpgrenze 23a des Verdichters 5a des Abgasturboladers 5 liegt, aber innerhalb des Verdichterkennfeldes 22 des Zusatzverdichters 6.

Hier ist das Verdichterkennfeld 22 des Zusatzverdichters 6 bzw. der Zusatzverdichter 6 ist so ausgestaltet, dass die Pumpgrenze 22a unterhalb des kritischen Betriebspunkts 24 liegt, d.h. der kritische Betriebspunkt 24 liegt innerhalb des Verdichterkennfelds 22 des Zusatzverdichters 6. Bei anderen Ausführungsbeispielen kann die Pumpgrenze 22a des Zusatzverdichters 6 auch näher am kritischen Betriebspunkt 24 liegen bzw. diesen mit einschließen. Das heißt, bei manchen Ausführungsbeispielen ist der Zusatzverdichter 6 gerade so ausgestaltet, dass sein Verdichterkennfeld 22 den kritischen Betriebspunkt auf seiner Pumpgrenze 22a umfasst.

Im Folgenden wird unter Bezugnahme auf die Fig. 3 ein Verfahren 30 zum Betreiben der Verbrennungskraftmaschine 1 von Fig. 1 beschrieben.

Bei 31 ermittelt das Verfahren einen Betriebszustands des Abgasturboladers 5 bzw. seines Verdichters 5a.

Dabei kann die Steuerung 20 z.B. Sensorsignale von dem Luftmassenstromsensor 17 empfangen und auf deren Grundlage einen Luftmassenstromwert "m" ermitteln und damit bspw. den "x"-Achsenwert des Verdichterkennfelds der Fig. 2 ermitteln. Außerdem kann zusätzlich oder alternativ die Steuerung 20 auf Grundlage eines Gasmodells und entsprechender Betriebsparameter der Verbrennungskraftmaschine 1, wie bspw. Drehzahl des Verbrennungsmotors 2 und dergleichen, einen simulierten Luftmassenstromwert ermitteln.

Weiterhin kann die Steuerung 20 Sensorignale von dem ersten 18 und dem zweiten 19 Drucksensor empfangen, sodass für den Zusatzverdichter 6 das Druckverhältnis P der Ordinate von Fig. 2 ermittelt werden kann. Ferner kann die Steuerung 20 annehmen, dass auf der Eingangsseite des Verdichters 5a Atmosphärendruck herrscht und folglich auf Grundlage eines Standard-Atmosphärendruckwertes und Sensorsignalen des ersten Drucksensors 18, der dem Ausgangsdruck des Verdichters 5a repräsentierende Sensorsignale liefert, das entsprechende Druckverhältnis P für den Verdichter 5a ermitteln.

Bei 32 wird in Abhängigkeit des ermittelten Betriebszustands des Abgasturboladers 5 bzw. seines Verdichters 5a der Zusatzverdichter 6 derart betrieben, dass er einem aufgrund des Betriebszustands des Abgasturboladers 5 hervorgerufenen Druckabfall entgegenwirkt und somit bspw. einem Kaudern, wie oben beschrieben, entgegenwirkt.

Dabei wird bspw. festgestellt, dass der kritischer Betriebspunkt 24, wie er in der Fig. 2 dargestellt ist, vorliegt, sodass der Abgasturbolader 5 mit seinem Verdichter 5a unterhalb seiner Pumpgrenze 23a betrieben werden würde.

Das in der Steuerung 20 ablaufende Verfahren 30 kann dabei bei 33 auch veranlassen, dass das Bypassventil 8 entsprechend geschaltet wird und somit der Luftstrom nicht über die Umgehung 7, sondern über den Zusatzverdichter 6 von dem Verdichter 5a kommend geleitet wird.

Dabei kann das Öffnen des Bypassventils 8 vor oder nach dem Betreiben des Zusatzverdichters 6 erfolgen. Der Zusatzverdichter 6 kann dabei bspw. mit einer Höchstdrehzahl betrieben werden oder einer anderen Drehzahl, die bspw. in Abhängigkeit des Betriebszustands des Abgasturboladers 5 mit seinem Verdichter 5a ermittelt werden kann.

Bei 34 kann außerdem vorgesehen sein, einen Parameter zu ermitteln, der indikativ für eine erwartete Betriebszustandsänderung des Abgasturboladers 5 ist, wie es auch schon weiter oben beschrieben wurde. Dieser Schritt kann auch im Rahmen der Ermittlung von 31 stattfinden. Der Parameter ist dabei repräsentativ für eine oder mehrere Zustandsgrößen, wie Drehzahl des Verbrennungsmotors 2, Drehmoment des Verbrennungsmotors 2, Getriebestatus, Kupplungsstatus oder dergleichen, wie es oben bereits ausgeführt wurde.

Damit ist es möglich, prädiktiv zu ermitteln, ob ein Betriebszustand unterhalb der Pumpgrenze 23a mit einer gewissen Wahrscheinlichkeit eintreten wird, bspw. innerhalb eines vorgegebenen Zeitraums.

Dann kann zurück zu 32 gesprungen werden, und es kann der Zusatzverdichter 6, in diesem Falle vorsorglich, betrieben werden. Bei manchen Ausführungsbeispielen wird dann nur im Schritt 33 das Bypassventil 8 gestellt und die Umgehung 7 umgangen, wenn tatsächlich der vorhergesagte Betriebszustand eintritt bzw. tatsächlich eine Unterschreitung der Pumpgrenze 23a stattfindet.

Bei 35 kann außerdem ermittelt werden, ob der aktuelle Betriebszustand wieder unterhalb der Pumpgrenze 23a des Verdichters 5a des Abgasturboladers 5 liegt. Ist dies der Fall, so kann bei 36 der Zusatzverdichter 6 abgeschaltet werden oder alternativ stufenweise seine Drehzahl herunterfahren, bis der gewünschte Ladedruck wieder vollständig alleine vom Abgasturbolader 5 mit Verdichter 5a geliefert wird. Dabei wird die Drehzahl des Zusatzverdichters 6 solange verringert, bis der Zusatzverdichter 6 vollständig abgeschaltet ist. Nach Abschluss des Vorgangs kann das Bypassventil 8 wieder entsprechend gestellt werden, sodass die Umgehung 7 aktiv ist.

### Bezugszeichenliste

- 1: Verbrennungskraftmaschine
- 2: Verbrennungsmotor
- 3: Frischluftzufuhr
- 4: Luftfilter
- 5: Abgasturbolader
- 5a: Verdichter von 5
- 5b: Turbine von 5
- 6: elektrischer Zusatzverdichter
- 7: Umgehung ("Bypass")
- 8: Bypassventil
- 9: Lufteintritt (Luftzufuhr) von 2
- 10: Luftregelklappe
- 11: Hochdruck-Abgasrückführung
- 12: Hochdruck-Abgasrückführungsventil
- 13: Abgasreinigung
- 14: Abgasklappe
- 15: Niederdruck-Abgasrückführung
- 16: Niederdruck-Abgasrückführungsventil
- 17: Luftmassenstromsensor
- 18: Erster Drucksensor
- 19: Zweiter Drucksensor
- 20: Steuerung
- 21: Verbindung zu weiteren Komponenten
- 22: Verdichterkennfeld von 6
- 22a: Pumpgrenze von 22
- 23: Verdichterkennefeld von 5, 5a
- 23: Pumpgrenze von 23
- 24: Kritischer Betriebszustand
- 30: Verfahren zum Betreiben von 1
- 31: Ermitteln Betriebszustand
- 32: Betreiben des Zusatzverdichters
- 33: Steuern des Bypassventils 8
- 34: Ermitteln Parameter inidkativ für erwartete Betriebszustandsänderung von 5
- 35: Ermitteln, ob Betriebszustand oberhalb Pumpgrenze 23a liegt
- 36: Abschalten des Zusatzverdichters

## Patentansprüche

1. Verbrennungskraftmaschine für ein Kraftfahrzeug, umfassend:
einen Verbrennungsmotor (2);
eine Luftzufuhr (9) für den Verbrennungsmotor (2),
einen Abgasturbolader (5) mit Verdichter (5a),
einen Zusatzverdichter (6), der unabhängig vom Abgasturbolader (5) betreibbar ist, wobei der Zusatzverdichter (6) stromabwärts zwischen dem Verdichter (5a) des Abgasturboladers (5) und der Luftzufuhr (9) des Verbrennungsmotors (2) angeordnet ist und wobei der Zusatzverdichter (6) in Abhängigkeit von einem Betriebszustand des Abgasturboladers (5) derart betreibbar ist, dass er einem durch den Betriebszustand des Abgasturboladers (5) hervorgerufenen Druckabfall in der Luftzufuhr (9) entgegenwirkt.

2. Verbrennungskraftmaschine nach Anspruch 1, wobei der Zusatzverdichter (6) derart ausgestaltet ist, dass seine Pumpgrenze (22a) bei einem niedrigeren Luftmassenstrom liegt als die Pumpgrenze (23a) des Abgasturboladers (5) mit Verdichter (5a).

3. Verbrennungskraftmaschine nach einem der vorhergehenden Ansprüche, wobei eine Umgehung (7) des Zusatzverdichters (6) vorgesehen ist.

4. Verbrennungskraftmaschine nach Anspruch 2 und 3, wobei der Zusatzverdichter (6) mittels der Umgehung (7) umgangen wird, solange der Abgasturbolader (5) oberhalb seiner Pumpgrenze (23a) betrieben wird.

5. Verbrennungskraftmaschine nach Anspruch 3 oder 4, wobei in der Umgehung (7) ein Absperrmittel (8) vorgesehen ist.

6. Verfahren zum Betreiben einer Verbrennungskraftmaschine (1) für ein Kraftfahrzeug, wobei diese mit einem Verbrennungsmotor (2), einer Luftzufuhr (9) für den Verbrennungsmotor (2), einem Abgasturbolader (5) mit Verdichter (5a) und mit einem Zusatzverdichter (6) versehen ist, wobei der Zusatzverdichter (6) unabhängig vom Abgasturbolader (5) betreibbar ist und stromabwärts zwischen dem Verdichter (5a) des Abgasturboladers (5) und der Luftzufuhr (9) des Verbrennungsmotors (2) angeordnet ist, wobei das Verfahren umfasst:
Ermitteln (31) eines Betriebszustands des Abgasturboladers (5);
Betreiben (32), in Abhängigkeit des ermittelten Betriebszustands des Abgasturboladers (5), des Zusatzverdichters (6) derart, dass er einem aufgrund des Betriebszustands des Abgasturboladers (5) hervorgerufenen Druckabfall in der Luftzufuhr (9) entgegenwirkt.

7. Verfahren nach Anspruch 6, wobei das Ermitteln (31) des Betriebszustands das Ermitteln eines Luftmassenstroms zwischen dem Zusatzverdichter (6) und dem Verdichter (5a) des Abgasturboladers (5) umfasst.

8. Verfahren nach Anspruch 6 oder 7, wobei das Ermitteln (31) des Betriebszustands das Ermitteln eines Luftzufuhrdrucks zwischen dem Verdichter (5a) des Abgasturboladers (5) und dem Zusatzverdichter (6) umfasst und/oder das Ermitteln eines Luftzufuhrdrucks stromabwärts des Zusatzverdichters (6).

9. Verfahren nach einem der Ansprüche 6 bis 8, wobei das Ermitteln (31) des Betriebszustandes das Ermitteln eines Parameters umfasst, der indikativ für eine erwartete Betriebszustandsänderung des Abgasturboladers (5) ist.

10. Verfahren nach Anspruch 9, wobei der Parameter repräsentativ für eine der folgenden Zustandsgrößen ist: Drehzahl des Verbrennungsmotors, Drehmoment des Verbrennungsmotors, Getriebestatus, Kupplungsstatus.
